# EUROPEAN PATENT SPECIFICATION

(11) **EP 0 770 449 B1**
(45) Date of publication and mention of the grant of the patent: **28.03.2001**
(21) Application number: 96307637.7
(22) Date of filing: 22.10.1996
(51) Int. Cl.: B23K 35/26, C22C 13/00

(54) **Articles comprising low temperature solder alloy**
Niedrigschmelzende Weichlotlegierung enthaltende Gegenstände
Articles comprenant un alliage pour soudage tendre à bas point de fusion

(30) Priority: 30.10.1995 US 550145
(43) Date of publication of application: 02.05.1997
(73) Proprietor: AT&T Corp., New York, NY 10013-2412 (US)
(72) Inventor: McCormack, Mark Thomas, Dublin, Ohio 43017 (US)
(74) Representative: Johnston, Kenneth Graham

(56) References cited:
- WO-A-95/28249
- DE-C- 3 730 764
- FR-A- 939 104
- FR-A- 2 496 525
- CHEMICAL ABSTRACTS, vol. 77, no. 24, 11 December 1972 Columbus, Ohio, US; abstract no. 155660, TANAKA, HIROSHI ET AL: "Tin-bismuth-lead alloy solder" XP002024971 & JP 46 036 446 A (SENJU METAL INDUSTRY CO., LTD.)
- CHEMICAL ABSTRACTS, vol. 111, no. 26, 25 December 1989 Columbus, Ohio, US; abstract no. 238103, SAMOILENKO, V. G. ET AL: "Lead-tin alloy for soldering" XP002024972 & SU 1 500 455 A (PATON, E. O., INSTITUTE OF ELECTROWELDING, USSR;RIGA POLYTECHNIC INSTI)
- JOM, vol. 48, no. 5, May 1996, WARRENDALE US, pages 54-56, XP002024970 M.T. MCCORMACK ET AL: "A Lower-Melting-Point Solder for Surface Mounts"

## Description

### FIELD OF INVENTION:

This invention relates to Sn-Pb-Bi based solder alloys and to articles bonded therewith.

### BACKGROUND OF INVENTION:

Solder bonds are critical to the performance and reliability of many electronic devices. Currently, the most widely used solder alloy is the eutectic 63%Sn-37%Pb alloy (all compositional percentages in this disclosure are by weight) with a melting point of 183°C. A certain amount of superheating above the melting point is required in order to form bonds with solder alloys. For example, surface mount soldering operations using the currently prevalent Pb-Sn solder alloy typically have temperature peaks in the thermal profile of the reflow oven of approximately 210-220°C, and wave soldering operations using the same alloy have pot temperatures of approximately 240-260°C. There is a trend in the manufacturing of electronic devices to use less expensive polymer materials for packaging electronic components and making printed circuit boards. However, such practice often introduces manufacturing yield problems because these less expensive materials are more sensitive to temperature and moisture. For example, plastic packaged integrated circuits are known to be more susceptible to moisture induced delaminations at higher temperatures (> about 200°C). In order to alleviate these yield problems, lower melting point alloys that enable soldering operations to be performed at temperatures ≤ about 200°C are needed.

While there are currently three types of low melting point solder alloys available, they are not ideal for use. The three solders are high Bi content such as 58Bi-42 Sn, high In content, such as 52In-48Sn, and Sn-Pb-Bi alloy such as the 43Sn-43Pb-14Bi. With respect to the high Bi and high In content alloys, they are rarely used because they are incompatible with the industry standard Sn-Pb alloy component lead finishes.

When used with such lead finishes, these alloys interact with the Pb containing alloy and cause very low melting ternary phases that severely compromise the thermal fatigue resistance to the solder joints.

As for the 43Sn-43Pb-14Bi alloy, it is not used with great frequency throughout the industry due to its extremely wide melting range (approximately 137-170°C with residual amounts of about 5-10% melting at approximately 178°C). A tin-bismuth-lead solder alloy is described in Tanaka, H., et al., "Tin-bismuth-lead alloy solder", Chemical Abstracts, Vol. 77, No. 24 (December 11, 1972) and JP-A-46 036 446. Solder alloys having a wide melting range are undesirable as their use can introduce manufacturing difficulties and reliability problems. For example, formation of reliable solder joints requires the alloy, which has been superheated above 178°C, to cool below the solidus temperature of 137°C. With such a broad melting range, there is a potential that the soldered products may be insufficiently cooled before they are moved along the production line on a conveyor belt. In addition, the broad melting range, as known in the art, may promote undesirable segregation of elements in the solder alloy which accelerates thermal fatigue. Also, vibrations from the conveyor belt can result in improper fillet formation or separations in the solder joints which is undesirable from both an inspectability and reliability perspective. As such, greater care must be exercised in the handing of products soldered with alloys having broad melting ranges. In addition, the 43Sn-43Pb-14Bi alloy's solidus temperature of 137°C can cause reliability problems. For example, the temperature level of the products when in use (service temperature levels), in some cases, can approach about 100°C or greater. The proximity of alloy's solidus temperature to the upper service temperature levels is detrimental to thermal fatigue resistance. Thus, the use of solder alloys with a wide melting range beginning at temperatures which are in such close proximity to service environments subjects the solder bonds to conditions that accelerate thermal fatigue.

Accordingly, there is a need for a low melting point solder alloy that is compatible with the industry standard Sn-Pb alloy component lead finishes that begins melting at about 10-20°C below that of eutectic Sn-Pb and has a narrow melting range of about ≤ 20°C.

### SUMMARY OF INVENTION:

Applicant has made the surprising discovery that a ternary compound comprising between about 48-52% Sn by weight, 41-43% Pb, and from about 7-9% Bi yields an alloy which has a narrow melting range of about 169-175°C. The addition of Ag in amounts of about ≤ 0.9% by weight depresses the melting range to about 166-172°C. Amounts of Ag > 0.9% introduce Ag-containing phases with melting points in excess of 183°C. In one advantageous embodiment, the composition comprises approximately 49.75% Sn, 41.75% Pb, 8% Bi, and 0.5% Ag.

### BRIEF DESCRIPTION OF DRAWINGS:

Fig. 1 is a differential scanning calorimetry profile showing the melting of a 43Sn-43Pb-14Bi alloy;
Fig. 2 is a differential scanning calorimetry profile showing the melting of a 52Sn-40Pb-8Bi alloy;
Fig. 3 is a differential scanning calorimetry profile showing the melting of a 50Sn-40Pb-10Bi alloy;
Fig. 4 is a differential scanning calorimetry profile showing the melting of a 51.5Sn-40Pb-9Bi alloy;
Fig. 5 is a differential scanning calorimetry profile showing the melting of a 48Sn-44Pb-8Bi alloy;
Fig. 6 is a differential scanning calorimetry profile showing the melting of a 49Sn-43Pb-8Bi alloy;
Fig. 7 is a differential scanning calorimetry profile showing the melting of a 49.75Sn-41.75Pb-8Bi-0.5Ag alloy;
Fig. 8 is a differential scanning calorimetry profile showing the melting of a 50.75Sn-41Pb-8Bi-0.2Ag alloy;
Figs. 9a-b are differential scanning calorimetry profile showing the melting of a 50.5Sn-40.5Pb-8Bi-1Ag alloy;
Fig. 10 shows a thermal profile of a nitrogen convection reflow oven used in testing coupon samples of 59.75Sn-41.75Pb-8Bi-0.5Ag and eutectic 63Sn-37Pb alloys; and
Figs. 11a-b show the reflow characteristics of 59.75Sn-41.75Pb-8Bi-0.5Ag and eutectic 63Sn-37Pb alloys heated in accordance with the thermal profile in Fig. 10.

### DETAILED DESCRIPTION OF THE INVENTION:

Applicant has discovered alloys with lower melting temperatures than that of the eutectic Sn-Pb alloy based on the Sn-Pb-Bi system. The novel alloys, in addition to having lower melting temperatures, have narrow melting ranges of ≤ about 20°C and as narrow as ≤ about 10°C. "Melting range," as used herein, refers to the range from when melting of the alloy initiates (solidus temperature) unit at least 95 weight % of the alloy is melted (liquidus temperature). Compositions in accordance with the invention yield alloys having melting ranges from about 166-175°C. A very a small percentage of the alloy (≈2-3%) does not completely melt until several degrees Celsius beyond the liquidus temperature. In accordance with the invention, this residual amount should melt below 190 °C, preferably at or below 185 °C, and more preferably at or below 183 °C. As a result, operating temperatures of processes using the alloy of the invention can be reduced about 5-20°C below that of current processes using eutectic Sn-Pb alloy. Residual solids which have melting temperatures equal to or beyond 190 °C tend to interfere with fillet formation when soldered at the lower temperatures, thus resulting in solder joints which are susceptible to accelerated thermal fatigue.

Desirable composition ranges for the Sn-Pb-Bi containing alloy are: Sn between about 48-52%, preferably from about 49-51%, and more preferably about 50%, Pb between about 41-44%, preferably from about 41-43%, more preferably about 41.5-42.5%, and even more preferably about 42%, and Bi from about 7-9%, preferably from about 7.5-8.5%, and more preferably about 8%. All percentages herein are weight percent. The resulting ternary Sn-Pb-Bi alloy has a melting range of about 169-175°C. Compositional percentages of Bi greater than about 9% cause a portion of the alloy to melt at about 137°C; percentages of Bi below about 7% do not sufficiently reduce the melting point. Compositional percentages of Sn ≥ about 52% or Pb ≤ about 41% (or compositional percentages of Sn ≤ about 48% or Pb ≥ about 44%) tend to result in a portion of the alloy melting at about 137°C and/or residual solids melting at temperatures exceeding 190°C.

The addition of small amounts of less than or equal to about 0.9% Ag (by weight), preferably between about 0.2-0.9% Ag, more preferably from about 0.3-0.8% Ag, and even more preferably about 0.5% Ag have been found to effectively depress the solidus and melting temperatures below that of the corresponding ternary Sn-Pb-Bi alloy. In particular, an amount of Ag > about 0.2% but ≤ about 0.9% effectively results in an alloy within the inventive composition that has solidus and liquidus melting temperatures of about 166 and 173°C, respectively. Compositional percentages of Ag > 0.9% exhibits undesirable melting composition phases with melting points in excess of 200°C. Typically, elements such as Au, Cu, In, Ni, Pd, Sb, and/or Zn may be present in small amounts of ≤ about 0.5% and preferably from about 0.2-0.5% with no significant deleterious effect. Additionally, P, Se, and/or Te may also be present in small amounts of ≤ about 0.5%. The aggregate amount of these elements should be ≤ about 0.5% and preferably from 0.2-0.5%.

The alloys of the invention are prepared by any number of different ways known to those skilled in the art, such as by melting a mixture of elemental or partially alloyed metals. The alloys are also prepared by mechanical alloying or by deposition into thin or thick films by electrochemical processes such as electroplating, electroless plating, and electrophoresis. Chemical processes such as chemical vapor deposition or physical vapor deposition, i.e., evaporation or sputtering, are also useful.

The compositions according to the invention are shaped by any appropriate technique into articles in the form of wires, ribbons, bars, preforms, solder paste or cream containing alloy powder, suitable flux material, and other chemical constituents. The solder alloys are useful in the manufacture of articles such as through-holes, surface mounted circuit boards by conventional techniques such as, for example, wave soldering, dip soldering, laser soldering, reflow soldering of solder paste, deposited and patterned solder layers, and melting of preforms. Additionally, the solder alloys are useful in mechanically bonding two bodies, such as a laser chip solder-bonded to a sub-mount or other application where soldering at a lower temperature is required or desirable.

An application of the present invention is to conductively interconnect electronic components at relatively lower temperatures, for example, about 5-20°C lower than the conventional Pb-Sn processes. A component, such as a resistor, capacitor, transistor, integrated circuit, or other electronic component, having one or more leads is bonded to one or more solder-wettable bonding pads of a second component, such as a printed wiring board by any of the alloys of the present invention. The leads of the first component are in one embodiment a wire lead made from conductive metal, such as copper, silver, nickel, gold, aluminum, or other leads such as a conductive layer located on the bottom of the component. The solder-wettable bonding pads (which can be thought of as "leads" of the second component) are typically layers of Cu, Cu coated with Sn containing solder alloy, Cu-Ni-Au, or Cu-Ni-Pd. In addition, the Cu bonding pads are, for example, coated with an organic preservative such as imidazole or benzotriazole.

### EXAMPLES

### Example 1

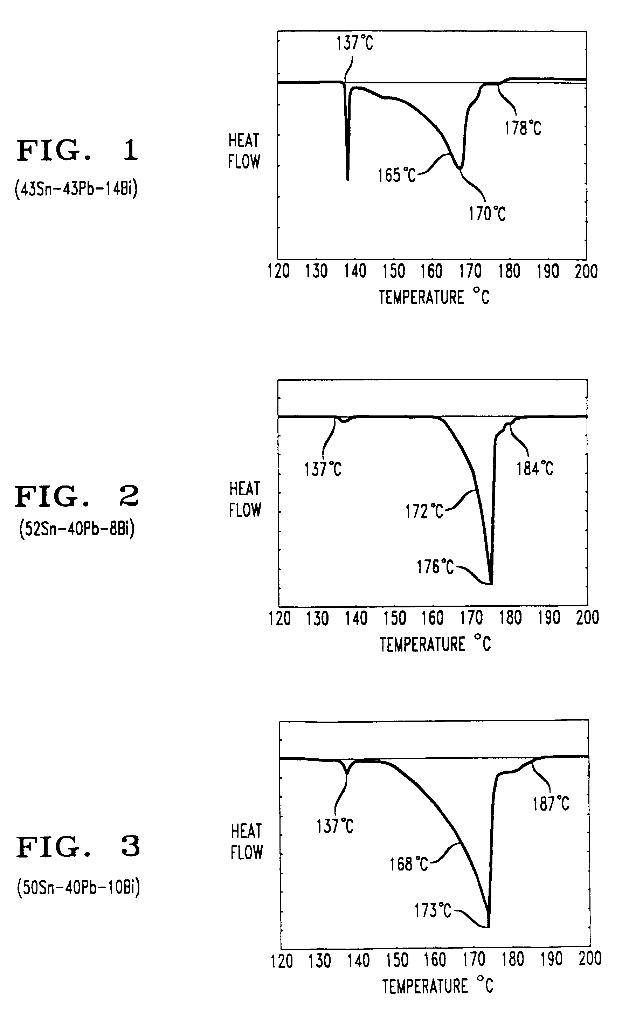

A Sn-Pb-Bi alloy comprising of 43% Sn, 43% Pb, and 14% Bi was prepared from high purity elemental Sn, Pb, and Bi. The alloy was formed by melting under argon atmosphere, within a sealed quartz having an inside diameter of 14 mm, and being held at 800°C for 1 hour before allowing to solidify at room temperature. The molten alloy was vigorously and repeatedly shaken at this elevated temperature to ensure compositional homogeneity. Fig. 1 shows a differential scanning calorimetry profile of the alloy upon heating at a scanning rate of 5 °C/min. The profile shows at least two separate regions of heat extraction. These regions indicate different melting composition phases, i.e., distinctly different temperatures at which separate portions of the alloy undergo melting. In the lower temperature region, a large portion of the alloy (≈30%) melts sharply at about 137°C, which is about the melting point of the 58Bi-42Sn eutectic alloy. The majority of the remaining alloy remains solid until the temperature reaches approximately about 165°C, as reflected by a discontinuous slope change on the pre-melting (solid state diffusion) portion of the second heat extraction well. This temperature of 165°C is in effect a second solidus temperature for the remaining portion of the alloy. The majority of the alloy finally becomes molten at approximately about 170°C. A small residual portion of about 5-10% does not completely melt until approximately 178°C.

### Example 2

An alloy composition comprising of 52% Sn, 40% Pb, and 8% Bi was prepared as in Example 1. A differential scanning calorimetry profile of the alloy upon heating at a scanning rate of of 5°C/min is shown in Fig. 2. The 52Sn-40Pb-8Bi alloy also exhibits at least two distinct regions of heat extraction, one at about 137°C and the other having solidus and liquidus occurring at about 172°C and 176°C, respectively. The region at 137°C indicates that a small amount of about 0.05% of the alloy melts at 137°C. Even such a small amount can adversely affect the mechanical properties of the solder alloy because that portion of the alloy will solidify at alloy grain boundaries, thus accelerating thermal fatigue. A small residual portion of about 5-7% melts at approximately 184°C.

### Example 3

An alloy composition comprising of 50% Sn, 40% Pb, and 10% Bi was prepared as in Example 1. A differential scanning calorimetry profile of the alloy upon heating at a scanning rate of 5 °C/min is shown in Fig. 3. Like Example 2, a portion of the alloy melts at about 137°C, the majority of the remaining alloy melts between about 168°C and 173°C, and a residual portion of about 5% melts at approximately 187°C.

### Example 4

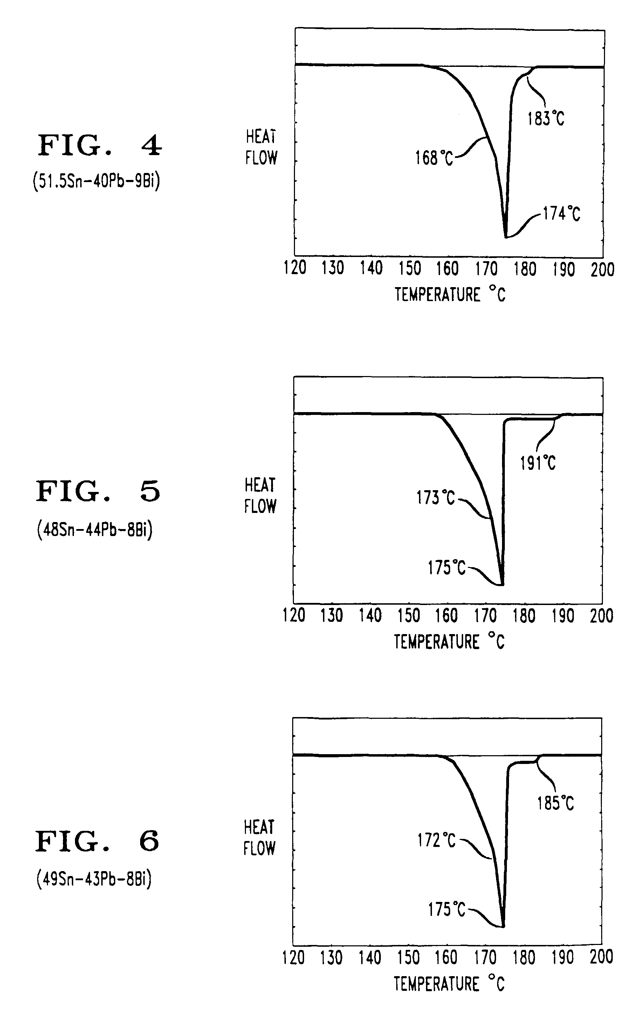

An alloy composition comprising of 51.5% Sn, 40% Pb, and 9% Bi was prepared as in Example 1. A differential scanning calorimetry profile of the alloy upon heating at a scanning rate of 5 °C/min is shown in Fig. 4. The solidus and liquidus temperatures, as indicated by the profile, is about 168°C and 174°C, respectively. A small residual portion of the alloy equaling about 2-3% completely melts at about 183°C. By reducing the amount of Sn to less than about 52% and keeping the amount of Bi ≤ about 9%, the melting phase occurring at 137°C is eliminated, thus achieving a low melting temperature with a narrow melting range of about 6°C.

### Example 5

An alloy composition comprising of 48% Sn, 44% Pb, and 8% Bi was prepared as in Example 1. A thermal profile of the alloy measured by differential scanning calorimetry scanned at a rate of 5°C/min is shown in Fig. 5. As shown, the alloy has similar melting characteristics as the alloy of Example 4 with the exception that the residual amount of the alloy equaling about 7% melts at about 191°C. As previously discussed, melting phases occurring beyond 190 °C do not effectively reduce soldering temperatures.

### Example 6

An alloy composition comprising of 49% Sn, 43% Pb, and 8.0% Bi was prepared as in Example 1. A differential scanning calorimetry profile of the alloy upon heating at a scanning rate of 5°C/min is shown in Fig. 6. The profile indicates that by increasing the contents of Sn to an amount greater than 48%, the melting temperature of the residual amount of the alloy is reduced from 191°C to about 185°C, thus effectively reducing the soldering temperature.

### Example 7

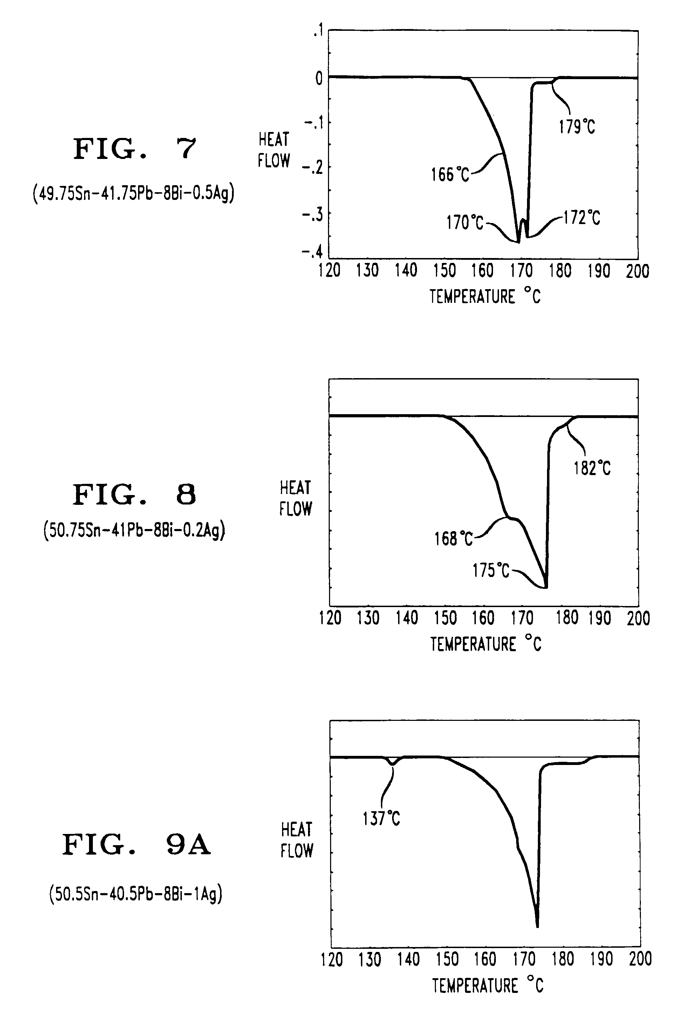

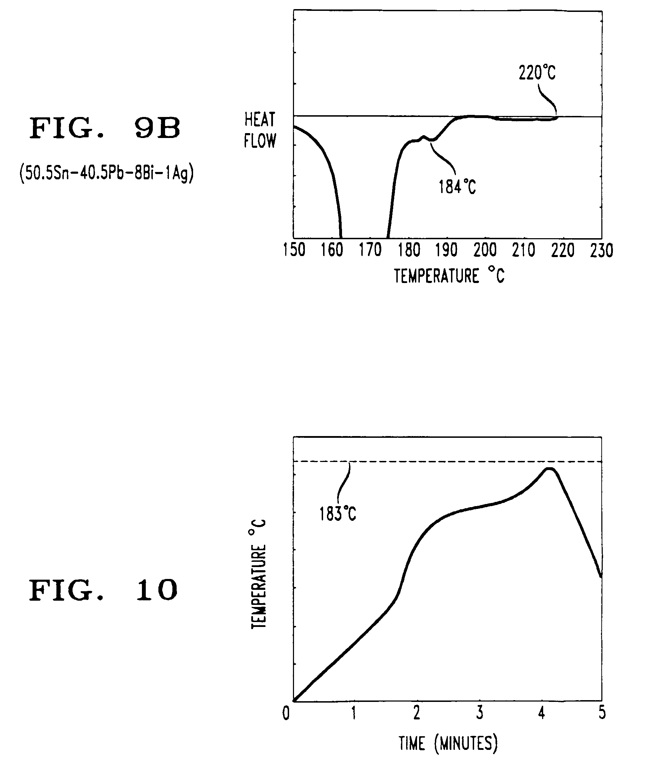

An alloy composition comprising of 49.75% Sn, 41.75% Pb, 8% Bi, and 0.5% Ag was prepared as in Example 1. A differential scanning calorimetry profile of the alloy upon heating at a scanning rate of 5 °C/min is shown in Fig. 7. From the profile, the majority of the 49.75Sn-41.75Pb-8Bi-0.5Ag alloy has a solidus temperature of about 166°C and a liquidus temperature of about 172°C. The remaining portion, which amounts to less than about 2-3%, melts at about 179°C. The addition of silver in an amount ≤ 0.9% effectively reduces the melting range of the alloy several degrees Celsius. However, percentages of silver ≤ 0.2% do not significantly reduce the alloy's melting range, as shown by the differential scanning calorimetry profile of a 50.8Sn-41Pb-8Bi-0.2Ag alloy in Fig. 8. Amounts of silver > 0.9% tends to reintroduce the lower temperature melting phases at about 137°C, as shown by the differential scanning calorimetry profile of 51Sn-41Pb-8Bi-1Ag alloy in Fig. 9a. Also, examining Fig. 9b, which is a magnification of the relevant portions of Fig. 9a, shows that amounts of silver > 0.9% form phases with melting points of about 220°C.

### Example 8

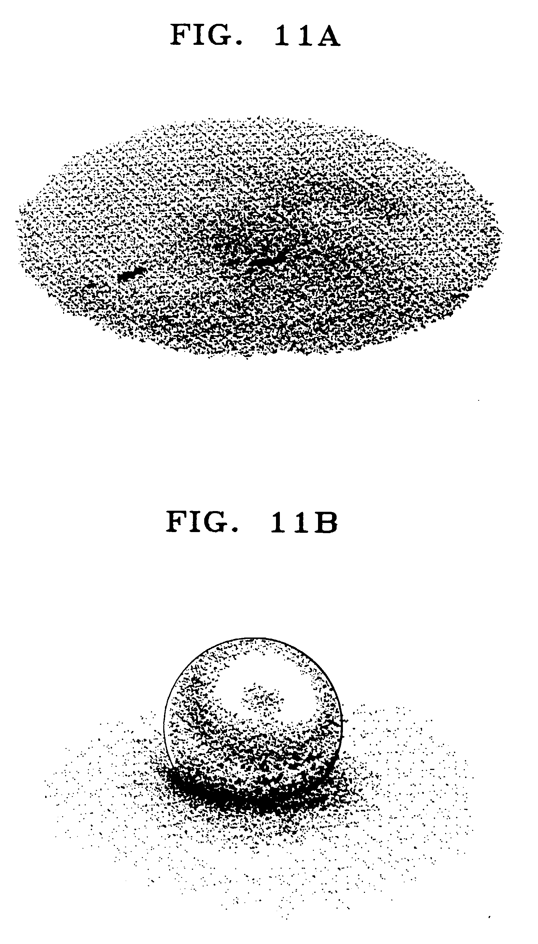

Comparison testing of the reflow characteristics eutectic 63-Sn-37Pb and 49.75Sn-41.75Pb-8Bi-0.5Ag was performed. Solder paste for each composition was made from a conventional no-clean mildly activated rosin (RMA) technique. The eutectic 63Sn-37Pb and 49.75Sn-41.75Pb-8Bi-0.5Ag pastes were printed using the same flux vehicle on non-wettable Al₂O₃ substrates. The pattern of the paste on the substrates is a disk of about 0.25 inches diameter and 0.10 inches high in height. The samples were heated in a nitrogen convection reflow oven with the top-side substrate temperature being monitored by a calibrated thermocouple. The thermal profile of the test samples is shown in Fig. 10. The thermal profile shows that the peak top-side temperature in this experiment is about 179°C, which is below that of eutectic 63Sn-37Pb. Figs. 11a-b are copies of photographs respectively showing 63Sn-37Pb and 49.75Sn-41.75Pb-8Bi-0.5Ag samples after cooling. As shown, the 49.75Sn-41.75Pb-8Bi-0.5Ag alloy exhibits excellent paste reflow that is free of solder balls, whereas the eutectic 63Sn-37Pb alloy did not reflow at all.

## Claims

1. An article comprising at least first and second components connected together by an alloy comprising Sn in the range 48-52% by weight, Pb in the range of 41-44% by weight, Bi in the range of 7-9% by weight and wherein the remainder, if any, is selected frpm the group consisting of Au, Cu, In, Ni, Pd, Sb, Zn in the amount of 0.2-0.5% by weight and Ag in the amount of 0.3 to 0.9% by weight and wherein the melting range of the solder alloy without silver is 169°C to 175°C and the melting range of the solder alloy with remainder Ag is 166°C to 172°C, wherein the melting range is the range from the solidus temperature to the liquidus temperature being the temperature at which at least 95% by weight of the alloy is melted.

2. The article of claim 1 wherein the alloy comprises 49-51% by weight Sn and Pb is 41.5-42.5% by weight.

3. The article of claim 2 wherein the alloy comprises 7.5-8.5% by weight Bi.

4. The article of claim 2 wherein the alloy comprises 50% by weight Sn, 42% by weight Pb, and 8% by weight Bi.

5. The article of claim 1 wherein the first and second components are electrical components conductively connected together by the alloy.

6. The article of claim 5 wherein the alloy is formed into a paste or cream, and wherein the paste or cream is used for connecting the first component to the second component by surface-mount soldering.

7. The article of claim 5 wherein the first electrical component is connected to the second electrical component by wave soldering.

8. The article of claim 7 wherein the alloy is formed into a paste or cream, and wherein the paste or cream is used for connecting the first component to the second component by surface-mount soldering.

9. The article of claim 8 wherein the alloy is reflowed at temperatures of 5-20°C less than that used for reflowing eutectic Sn-Pb alloy.

10. The article of claim 5 wherein the alloy is formed into a solder paste, cream, preform, wire, ribbon or bar.

11. An article according to claim 3 without Ag in the remainder.

## Patentansprüche

1. Gegenstand, der mindestens eine erste und zweite Komponente umfaßt, die miteinander durch eine Legierung verbunden sind, die Sn im Bereich 48-52 Gew.-%, Pb im Bereich 41-44 Gew.-%, Bi im Bereich 7-9 Gew.-% umfaßt und wobei ein etwaiger Rest aus der Gruppe bestehend aus Au, Cu, In, Ni, Pd, Sb, Zn in einer Menge von 0,2-0,5 Gew.-% und Ag in einer Menge von 0,3 bis 0,9 Gew.-% ausgewählt ist und wobei der Schmelzbereich der Lötlegierung ohne Silber 169°C bis 175°C beträgt und der Schmelzbereich der Lötlegierung mit dem Rest Ag 166°C bis 172°C beträgt, wobei der Schmelzbereich der Bereich von der Solidustemperatur bis zu der Liquidustemperatur ist, wobei die Liquidustemperatur diejenige Temperatur ist, bei der mindestens 95 Gew.-% der Legierung geschmolzen ist.

2. Gegenstand nach Anspruch 1, wobei die Legierung 49-51 Gew.-% Sn und 41,5-42,5 Gew.-% Pb umfaßt.

3. Gegenstand nach Anspruch 2, wobei die Legierung 7,5-8,5 Gew.-% Bi umfaßt.

4. Gegenstand nach Anspruch 2, wobei die Legierung 50 Gew.-% Sn, 42 Gew.-% Pb und 8% Bi umfaßt.

5. Gegenstand nach Anspruch 1, wobei die erste und zweite Komponente elektrische Komponenten sind, die durch die Legierung leitend miteinander verbunden sind.

6. Gegenstand nach Anspruch 5, wobei die Legierung zu einer Paste oder Creme geformt wird, die zum Verbinden der ersten Komponente mit der zweiten Komponente durch Oberflächenmontagelöten verwendet wird.

7. Gegenstand nach Anspruch 5, wobei die erste elektrische durch Schwallöten mit der zweiten elektrischen Komponente verbunden wird.

8. Gegenstand nach Anspruch 7, wobei die Legierung zu einer Paste oder Creme geformt wird, die zum Verbinden der ersten Komponente mit der zweiten Komponente durch Oberflächenmontagelöten verwendet wird.

9. Gegenstand nach Anspruch 8, wobei die Legierung bei Temperaturen von 5-20°C aufgeschmolzen wird, die unter denjenigen liegen, die zum Aufschmelzen von eutektischer Sn-Pb-Legierung verwendet werden.

10. Gegenstand nach Anspruch 5, wobei die Legierung zu Lötpaste, -creme, -preform, -draht, -band oder -stab geformt wird.

11. Gegenstand nach Anspruch 3 ohne Ag im Rest.

## Revendications

1. Article comprenant au moins un premier et un second composants liés ensemble par un alliage comprenant du Sn dans l'intervalle de 48-52% en poids, du Pb dans l'intervalle de 41-44% en poids, du Bi dans l'intervalle de 7-9% en poids et dans lequel, le restant, s'il y en a, est choisi parmi le groupe constitué de Au, Cu, In, Ni, Pd, Sb, Zn dans la quantité de 0,2-0,5% en poids et Ag dans la quantité de 0,3 à 0,9% en poids et dans lequel l'intervalle de fusion de l'alliage pour brasure sans argent est 169°C à 175°C et l'intervalle de fusion de l'alliage pour soudure avec l'Ag restant est 166°C à 172°C, dans lequel l'intervalle de fusion est l'intervalle de la température du solidus à la température du liquidus, la température du liquidus étant la température à laquelle au moins 95% en poids de l'alliage sont fondus.

2. Article selon la revendication 1, dans lequel l'alliage comprend 49-51% en poids de Sn et 41,5-42,5% en poids de Pb.

3. Article selon la revendication 2, dans lequel l'alliage comprend 7,5-8,5% en poids de Bi.

4. Article selon la revendication 2, dans lequel l'alliage comprend 50% en poids de Sn, 42% en poids de Pb et 8% en poids de Bi.

5. Article selon la revendication 1, dans lequel le premier et le second composants sont des composants électriques liés ensemble de façon conductrice par l'alliage.

6. Article selon la revendication 5, dans lequel l'alliage est formé en une pâte ou crème, et dans lequel la pâte ou crème est utilisée pour la liaison du premier composant au second composant par brasage de montage en surface.

7. Article selon la revendication 5, dans lequel le premier composant électrique est lié au second composant électrique par brasage à la vague.

8. Article selon la revendication 7, dans lequel l'alliage est formé en une pâte ou crème, et dans lequel la pâte ou crème est utilisée pour la liaison du premier composant au second composant par brasage de montage en surface.

9. Article selon la revendication 8, dans lequel l'alliage est brasé par refusion à des températures de 5-20°C inférieures à celles utilisées pour le brasage d'alliage eutectique de Sn-Pb.

10. Article selon la revendication 5, dans lequel l'alliage est formé en une pâte, une crème, une préforme, un fil, un ruban ou une barre pour brasure.

11. Article selon la revendication 3 sans Ag dans le restant.
